# EUROPÄISCHE PATENTSCHRIFT

(11) **EP 2 212 572 B1**
(45) Veröffentlichungstag und Bekanntmachung des Hinweises auf die Patenterteilung: **18.05.2011**
(21) Anmeldenummer: 08855110.6
(22) Anmeldetag: 22.10.2008
(51) Int. Cl.: F16C 9/00, F16C 19/30, F16C 33/46, F16C 33/48, F16C 33/50, F16C 19/54, F16C 33/51

(54) **RADIAL-AXIAL-WÄLZLAGER**
RADIAL-AXIAL ROLLING BEARING
ROULEMENT RADIAL-AXIAL

(30) Priorität: 28.11.2007 DE 102007057253
(43) Veröffentlichungstag der Anmeldung: 04.08.2010
(73) Patentinhaber: Schaeffler Technologies GmbH & Co. KG, 91074 Herzogenaurach (DE)
(72) Erfinder: NAGENGAST, Gerhard, 91336 Heroldsbach (DE)
(86) Internationale Anmeldenummer: PCT/EP2008/064299
(87) Internationale Veröffentlichungsnummer: WO 2009/068376

(56) Entgegenhaltungen:
- DD-A- 17 558
- DE-A1- 3 620 102
- US-A- 3 652 141
- US-A- 5 501 533

## Beschreibung

### Gebiet der Erfindung

Die Erfindung betrifft ein Radial-Axial-Wälzlager mit einem Innenring, zu dem koaxial ein Außenring angeordnet ist, zwischen denen zur Aufnahme von radialen Kräften zylindrische Wälzkörper abrollen und mit beidseitig zur Aufnahme von axialen Kräften angeordneten zylindrischen Wälzkörpern, deren Laufbahnen einerseits von Stirnflächen des Außenringes und andererseits von je einer Laufscheibe gebildet sind, wobei die zylindrischen Wälzkörper in Käfigsegmenten geführt sind, deren Führungsstege in einen Spalt eingreifen, der vom Innen- und vom Außenring gebildet ist.

### Hintergrund der Erfindung

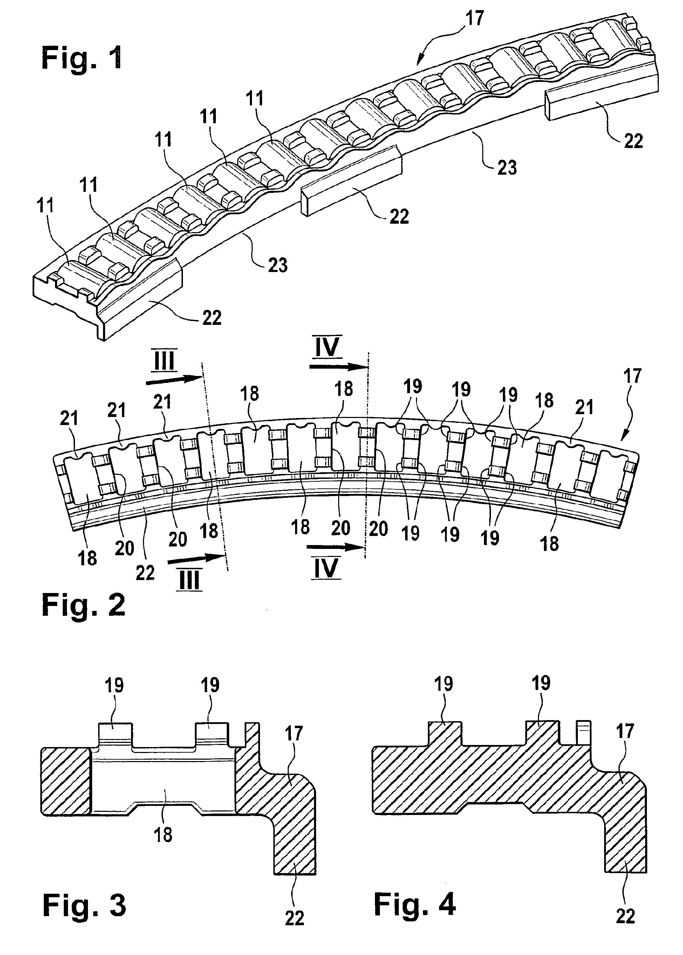

Ein derart gattungsgemäß ausgebildetes Radial-Axial-Wälzlager ist aus der DE 36 20 102 A1 vorbekannt. Wie aus Figur 1 und der zugehörigen Beschreibung ersichtlich, besteht dieses Lager aus einem Innenring und einem konzentrisch dazu angeordneten Außenring, zwischen denen radiale Kräfte aufnehmende zylindrische Wälzkörper abrollen. Beidseitig vom Außenring sind axiale Kräfte aufnehmende zylindrische Wälzkörper angeordnet, deren Laufbahnen einerseits von den Stirnflächen des Außenringes und andererseits von je zwei ebenfalls beidseitig angeordneten Laufscheiben gestellt sind. Der Zusammenhalt des Lagers erfolgt mit Hilfe einer Befestigungsschraube, welche den Innenring und die beiden Laufscheiben durchdringt. Wie insbesondere aus den Figuren 2, 3 und 4 erkennbar, sind die zylindrischen Wälzkörper der beiden Axiallager durch Käfigsegmente derart geführt, dass jeder zylindrische Wälzkörper von je einem einzelnen Käfigsegment aufgenommen ist. Dieses einzelne Käfigsegment ist an seinem radial innen liegendem Ende mit je zwei in Umfangsrichtung voneinander beabstandeten Vorsprüngen versehen, die in einen Spalt eingreifen, der vom Innenring und vom Außenring gebildet ist. Die Längsseiten der Taschen der einzelnen Käfigsegmente sind verrundet. Außerdem weisen sie Schlitze auf, um ein Verschränken der zylindrischen Rollen der Axiallager in Umfangsrichtung zu verhindern, derart, dass sich die Längsseiten der Taschen durch die vorhandenen Schlitze in gewisser Weise durchbiegen.

Nachteilig dabei ist, dass durch die einzelnen Käfigsegmente keine bzw. eine nicht ausreichende Führung der zylindrischen Wälzkörper beider Axiallager erfolgt, sodass diese insbesondere bei höheren Drehzahlen zu Verschränkungen neigen. Ein so mit einzelnen Käfigsegmenten versehenes gattungsgemäßes Radial-Axial-Wälzlager eignet sich insbesondere aufgrund der ungenügenden Führung der axialen Zylinderrollen nicht für höhere Drehzahlen. Derartige Einzelkäfigsegmente sind instabil und neigen bei höheren Drehzahlen dazu, in Umfangsrichtung ungleiche Abstände voneinander einzunehmen. Es ist weiter von Nachteil, dass sich eine solche gattungsgemäße Lageranordnung nur mit einem erhöhten Aufwand montieren lässt, da jeder einzelner Wälzkörper der beidseitig angeordneten Axiallager mit dem Käfigsegment verbunden und auch einzeln montiert werden muss.

### Zusammenfassung der Erfindung

Ausgehend von den Nachteilen des bekannten Standes der Technik liegt der Erfindung daher die Aufgabe zugrunde, ein gattungsgemäßes Radial-Axial-Wälzlager derart weiterzuentwickeln, dass deren Axialkäfige eine möglichst sichere, genaue und reibungsarme Führung der Wälzkörper in Umfangsrichtung ermöglichen. Dabei sollen die Käfige so wenig Platz und Aufwand wie möglich beanspruchen, nicht verschleißen und eine möglichst maximale Anzahl von Wälzkörpern aufnehmen.

Erfindungsgemäß wird diese Aufgabe nach dem kennzeichnenden Teil von Anspruch 1 in Verbindung mit dessen Oberbegriff dadurch gelöst, dass die Käfigsegmente bogenförmig ausgebildet sind und L-förmig abgewinkelte Führungsstege aufweisen, die sich wenigstens über einen Teil einer Umfangsausdehnung der Käfigsegmente erstrecken und jedes einzelne Käfigsegment mehrere Taschen aufweist, in denen verliersicher je ein zylindrischer Wälzkörper aufgenommen ist.

Das erfindungsgemäße Käfigsegment weist im Gegensatz zu den Käfigsegmenten nach dem bisherigen Stand der Technik im Zusammenspiel mit dem Radial-Axial-Wälzlager folgende Vorteile auf:
- Durch die bogenförmige Gestaltung und L-förmige Ausbildung der Käfigsegmente weisen diese eine hohe Eigenstabilität auf und sind in der Lage, eine Vielzahl von Wälzkörpern aufzunehmen. Dies wiederum hat zur Folge, dass die Käfigsegmente durch ein Ändern ihres Krümmungsradiusses an im Durchmesser unterschiedliche Radial-Axial-Wälzlager in einfacher Weise anpassbar sind.
- Durch die Aufnahme einer Vielzahl von Wälzkörpern in die bogenförmigen Käfigsegmente wird auch die Herstellung der gesamten Wälzlageranordnung entscheidend verringert, da im Vergleich zum bisherigen Stand der Technik nur wenige Segmente mit vielen Wälzkörper gehandhabt werden müssen.
- Die erfindungsgemäßen Käfigsegmente ermöglichen durch den Eingriff der abgewinkelten Führungsstege in den zwischen Innenring und Außenring gebildeten Spalt eine sichere und genaue Führung der Wälzkörper, sodass deren gegenseitiges Verschränken verhindert ist. Damit sind neben den Wälzkörpern auch die Käfigsegmente selbst auf einer genau definierten Umlaufbahn sicher geführt. Aus diesem Grunde lassen sich mit derartigen Käfigen ausgestaltete Radial-Axial-Wälzlager aufgrund ihrer geringen Reibung mit hohen Drehzahlen betreiben.
- Die verliersichere Halterung der Wälzkörper in den Taschen der Käfigsegmente erleichtert nochmals die Montage der Gesamtlageranordnung.
- Bei im Durchmesser großen Lageranordnungen können in den Käfigsegmenten in radialer Richtung zwei Wälzkörper hintereinander angeordnet sein, sodass die die Reibung ungünstig beeinflussende Schlupfverhältnisse verbessert sind.
- Auch lassen sich derartige Käfigsegmente durch Spritzgießen von Kunststoffen in einfacher und kostengünstiger Weise in unterschiedlichen Größenverhältnissen herstellen.

Weitere vorteilhafte Ausführungsvarianten der Erfindung gehen aus den abhängigen Ansprüchen 2-10 hervor und sind nachstehend beschrieben.

So sollen gemäß Anspruch 2 die bogenförmigen Käfigsegmente einreihig ausgebildet sein und die Führungsstege sollen sich über deren gesamte Umfangsausdehnung erstrecken. Dabei ist von Vorteil, dass ein solch einreihiges Käfigsegment trotz leichter Bauweise dennoch eine hohe Stabilität aufweist.

Nach einem anderen zusätzlichen Merkmal gemäß Anspruch 3 sollen die bogenförmigen Käfigsegmente zweireihig ausgebildet sein und sich die Führungsstege über einen Teil von deren Umfangsausdehnung erstrecken. In diesem Fall weisen die Käfigsegmente aufgrund der Verlängerung der in radialer Richtung hintereinander angeordneten zylindrischen Wälzkörper bereits eine genügend hohe Eigenstabilität auf, sodass sich die Führungsstege nur über einen Teil der Umfangsausdehnung erstrecken brauchen.

Nach weiteren Merkmalen gemäß den Ansprüchen 4 und 5 ist eine sichere Halterung Wälzkörper in den Taschen der bogenförmigen Käfigsegmente vorgesehen. Danach sollen die Taschen zur Außenhalterung der Wälzkörper mit federnden Haltenasen ausgestattet sein, die sich in Umfangsrichtung gegenüberliegend und in radialer Richtung voneinander beabstandet sind. Die Innenhalterung erfolgt derart, dass die Taschen der bogenförmigen Käfigsegmente mit einer deren Breite verringernden durchgehenden Kante versehen ist. Diese Anordnung ist von Vorteil, weil sich die zylindrischen Wälzkörper von einer Seite durch Zurückfedern der Haltenasen einfach in die Taschen einfedern lassen.

Nach einem anderen zusätzlichen in Anspruch 6 beschriebenen Merkmal sollen die Taschen der bogenförmigen Käfigsegmente wenigstens an einem radial außen liegenden Ende mit einem punktartigen Vorsprung versehen sein. Dadurch ist sichergestellt, dass die zylindrischen Wälzkörper mit ihren außen liegenden Stirnflächen eine möglichst geringe Reibung erzeugen.

Nach einem weiteren Merkmal gemäß Anspruch 7 ist vorgesehen, dass der Innenring mit einer der Laufscheiben einstückig verbunden ist, sodass eine Trennungsebene außerhalb eines Laufbahnbereiches der zylindrischer Wälzkörper des radialen Teils des Lagers gelegt ist. Dabei ist von Vorteil, dass einerseits durch Zusammenfassung von zwei Teilen zu einem einstückigen Bauteil die Montage des Lagers erleichtert ist und dass andererseits die Laufeigenschaften der zylindrischen Wälzkörper des Radialwälzlagers nicht durch einen Spalt beeinträchtigt ist.

Nach einem anderen zusätzlichen Merkmal gemäß Anspruch 8 soll der Innenring mit einer Ausnehmung zur Aufnahme der zylindrischen Wälzkörper versehen sein. Dadurch wird eine genaue axiale Führung der Wälzkörper des Radiallagers ermöglicht, wobei nach einem weiteren zusätzlichen Merkmal gemäß Anspruch 9 die zylindrischen Wälzkörper entweder vollrollig oder in einem Käfig angeordnet sein sollen.

Schließlich ist nach einem letzten Merkmal der Erfindung gemäß Anspruch 10 vorgesehen, dass der Innenring und/oder der Außenring mit wenigstens einer Schmiermitteldurchtrittsbohrung ausgestattet ist.

Weitere Merkmale der Erfindung ergeben sich aus der nachfolgenden Beschreibung und aus den Zeichnungen, in den zwei Ausführungsbeispiele der Erfindung in vereinfachter Form dargestellt sind.

### Kurze Beschreibung der Zeichnungen

Es zeigen:
- Figur 1: eine perspektivische Darstellung eines einreihigen Käfigsegments mit aufgenommenen Wälzkörpern,
- Figur 2: eine Draufsicht auf ein Käfigsegment ohne Wälzkörper,
- Figur 3: einen Schnitt durch ein Käfigsegment entlang der Linie III-III in Figur 2,
- Figur 4: einen Schnitt entlang der Linie IV-IV in Figur 2,
- Figur 5: einen Längsschnitt durch ein Radial-Axial-Wälzlager mit einreihi- gem Käfigsegment,
- Figur 6: eine Draufsicht auf ein zweireihiges Käfigsegment,
- Figur 7: einen Schnitt durch das Käfigsegment entlang der Linie VII-VII in Figur 6,
- Figur 8: einen Schnitt entlang der Linie VIII-VIII in Figur 6 und
- Figur 9: einen Schnitt durch ein Radial-Axial-Wälzlager mit dem zweireihi- gen Käfigsegment. **Ausführliche Beschreibung der Zeichnungen**

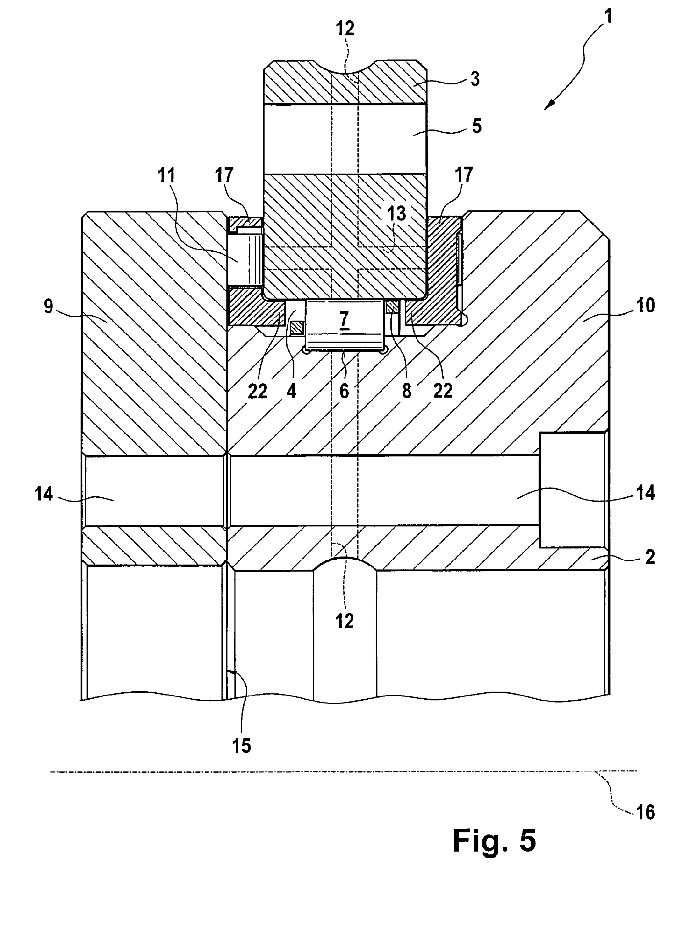

Das in Figur 5 dargestellte und mit 1 bezeichnete Radial-Axial-Wälzlager besteht aus dem Innenring 2 und dem konzentrisch angeordneten Außenring 3, die durch den Spalt 4 voneinander beabstandet sind, wobei der Außenring 3 mit wenigstens einer durchgehenden Befestigungsbohrung 5 versehen ist. Der Innenring 2 ist mit einer Ausnehmung 6 zur Aufnahme von zylindrischen Wälzkörpern 7 versehen, die radiale Kräfte aufnehmen und im Käfig 8 geführt sind.
Die Wälzkörper 7 wälzen auf nicht näher bezeichneten Laufbahnen ab, die einerseits vom Grund der Ausnehmung 6 und andererseits von der inneren Mantelfläche des Außenringes 3 gestellt sind. In axialer Richtung sind die Wälzkörper 7 durch die ebenfalls nicht bezeichneten Borde der Ausnehmung 6 sicher geführt und durch den Käfig 8 in Umfangsrichtung voneinander auf Abstand gehalten.

Zur Lageranordnung gehören weiter die beiden Laufscheiben 9 und 10, wobei die Laufscheibe 10 mit dem Innenring 2 zu einem einstückigen Bauteil verbunden ist. Dies bedeutet, Laufscheibe 10 und Innenring 2 sind L-förmig ausgestaltet. Zur Aufnahme von axialen Kräften sind zwischen Außenring 3 und Laufscheiben 9, 10 beidseitig zylindrische Wälzkörper 11 angeordnet, deren nicht näher bezeichnete Laufbahnen einerseits von den Stirnflächen des Außenringes 3 und andererseits von den Laufscheiben 9, 10 gestellt sind. Sowohl Innenring 2 als auch Außenring 3 sind mit radial verlaufenden Schmiermitteldurchtrittsbohrungen 12 versehen, die im Außenring 3 noch einen axial abzweigenden Teil 13 aufweisen. Laufscheiben 9 und das aus Laufscheibe 10 und Innenring 2 zusammengesetzte einstückige Bauteil weisen durchgehende Befestigungsbohrungen 14 auf, durch die nicht dargestellte Befestigungsschrauben zum Zusammenhalt der Lageranordnung geführt sind, wobei die Trennebene 15 außerhalb des Laufbahnbereiches der Wälzkörper 7 gelegt ist. Sowohl die radiale Kräfte aufnehmenden Wälzkörper 7 als auch die axiale Kräfte aufnehmenden Wälzkörper 11 wälzen um die gemeinsame Lagerachse 16 ab.

Wie insbesondere die Figuren 1-4 in Verbindung mit Figur 5 zeigen, sind die beidseitig angeordneten axiale Kräfte aufnehmenden zylindrischen Wälzkörper 11 in Taschen 18 der Käfigsegmente 17 aufgenommen. Die Wälzkörper 11 sind in den Taschen 18 verliersicher gehalten, wobei ein Verlieren nach außen Richtung der Laufscheiben 9, 10 durch Haltenasen 19 verhindert ist, die sich in jeder Tasche 18 an zwei Stellen in Umfangsrichtung gegenüber liegen. Der Verlust der Wälzkörper 11 nach innen in Richtung Innenring 3 ist durch eine Kante 20 verhindert, die im Gegensatz zu den Haltenasen 19 nur an einer Seite der Tasche 18 angeformt ist und deren Breite einschränkt. Außerdem weist jede Tasche 18 des Käfigsegmentes 17 an ihrem radial außen liegenden Ende den Vorsprung 21 auf, sodass die Reibung zwischen Tasche 18 und zylindrischen Wälzkörper 11 eingeschränkt ist. Wie auch erkennbar, sind die Käfigsegmente 17 am radial innen liegenden Ende mit dem L-förmig abgewinkelten Führungssteg 22 versehen, der, entweder wie in Figur 2 dargestellt, sich über die gesamte Umfangsausdehnung des Käfigsegments 17 erstreckt, oder, wie in Figur 1 gezeigt, sich nur über einen Teil davon erstreckt. Mit anderen Worten, gemäß Figur 1 ist der Führungssteg 22 durch Freistellungen 23 unterbrochen, was sich auf das Schmierungsverhalten des Lagers 1 günstig auswirkt. Wie Figur 5 zeigt, greifen die Käfigsegmente 17 über ihre Führungsstege 22 in den Spalt 4 ein, der zwischen Innenring 2 und Außenring 3 gebildet ist. Zur sicheren Führung der Käfigsegmente 17 werden am Lager 1 vorhandene Funktionsflächen in sinnvoller Weise genutzt, sodass die Wälzkörper 11 auf ihren Laufbahnen sicher gehalten und genau geführt sind. Figur 5 lässt weiter erkennen, dass sich die erfindungsgemäßen Käfigsegmente 17 in einfacher Weise auf die grundlegenden Bestandteile des Radial-Axial-Wälzlagers 1, d.h. auf die beiden Lagerringe 2, 3 und die beiden Laufscheiben 9, 10 einstellen lässt. Dies erfolgt dadurch, dass mit größer werdenden Durchmesser der Lagerringe 2, 3 bzw. der Laufscheiben 9, 10 die Käfigsegmente 17 in ihrer Biegung verringert werden.

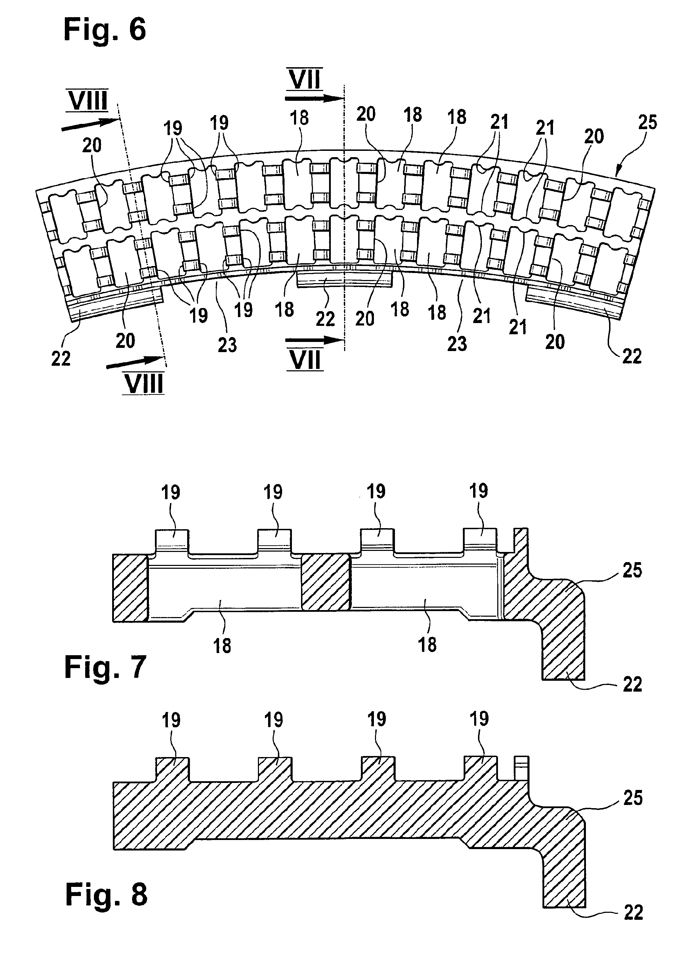

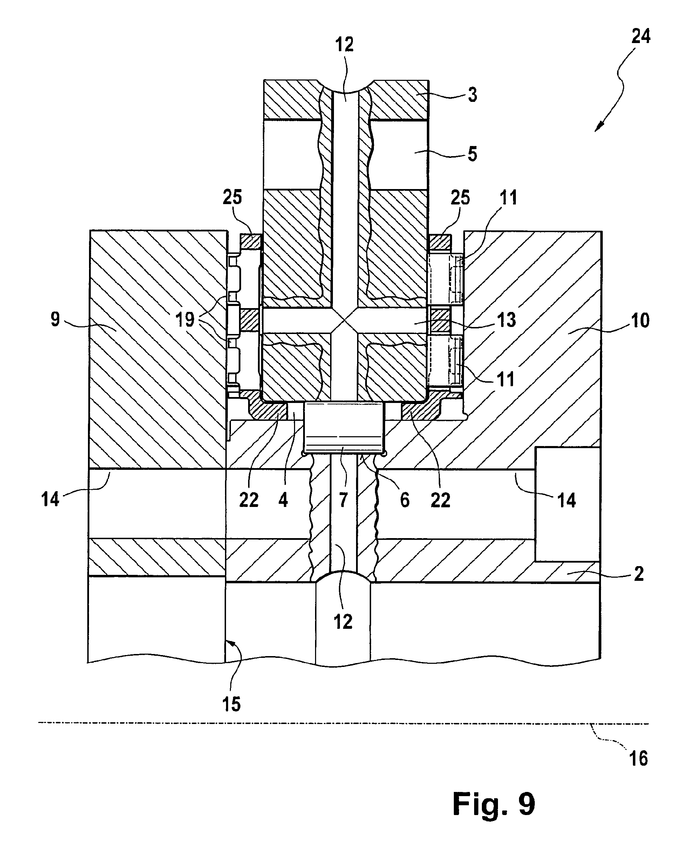

Die in den Figuren 6-8 dargestellten Käfigsegmente 25 und das in Figur 9 dargestellte Radial-Axial-Wälzlager 24 unterscheiden sich von den vorstehend beschriebenen Käfigsegmenten 17 und dem zugehörigen Lager 1 lediglich dadurch, dass die Käfigsegmente 25 zweireihig ausgebildet sind. Darunter ist zu verstehen, dass in radialer Richtung zwei Taschen 18 hintereinander angeordnet sind, die wiederum jeweils einen zylindrischen Wälzkörper 11 aufnehmen. Ansonsten sind die gleichen Bezugszeichen wie in den Figuren 1-5 verwendet worden, sodass auf eine ausführliche Beschreibung der Käfigsegmente 25 und des Radial-Axial-Wälzlagers 24 an dieser Stelle verzichtet werden kann.

Die vorstehend beschriebenen Radial-Axial-Wälzlager 1, 24 werden in großem Maße im Werkzeugmaschinenbau als sog. Rundtischlager vielfach angewendet. Die bogenförmigen Käfigsegmente 17, 25 mit den L-förmig abgewinkelten Führungsstegen 22 sorgen dafür, dass durch deren Eingriff in den an sich vorhandenen Spalt zwischen Innenring 2 und Außenring 3 die Wälzkörper 11 zur Aufnahme von axialen Kräften sicher und genau geführt sind. Dies ist bei Rundtischlagerungen von besonderer Bedeutung, da Ungenauigkeiten in der Wälzkörperführung zu unerwünschter Reibung führt und dadurch leistungsstärkere Antriebe in der Werkzeugmaschine erforderlich macht. Die Zusammenfassung von vielen einzelnen Käfigsegmenten zu dem erfindungsgemäßen bogenförmigen Käfigsegment 17, 25 macht den Käfigwerkstoff Kunststoff auch für große Lagerdurchmesser kostengünstig einsetzbar. Die kompakten Abmessungen sind durch Anwendung der Spritzgusstechnologie prozesssicher herstellbar, wobei die Käfigsegmente 17, 25 je nach Steifigkeitsanforderungen an das Lager ein- oder zweireihig herstellbar sind. Die Taschen 18 für die Wälzkörper 11 sind selbsthaltend ausgeführt, sodass ein maschinelles Füllen der Käfigsegmente 17, 25 möglich ist, was wiederum die Endmontage der Lageranordnungen 1, 24 vereinfacht. Die Verwendung von mehreren in radialer Richtung angeordneten Wälzkörper 11 im Käfigsegment 25 reduziert die Reibung bei gleicher oder höherer Axialsteifigkeit und verbessert die dynamischen Eigenschaften, was wiederum eine höhere Drehzahl der Rundtischlager erlaubt. Auch lassen sich die Käfigsegmente 17, 25 unkompliziert an bereits in Betrieb befindliche Lager anpassen, da deren Grundbestandteile, nämlich Innenring 2, Außenring 3, sowie Laufscheiben 9, 10 in der gleichen Form und Abmessung weiter verwendet werden können.

### Bezugszeichen

- 1: Radial-Axial-Wälzlager
- 2: Innenring
- 3: Außenring
- 4: Spalt
- 5: Befestigungsbohrung
- 6: Ausnehmung
- 7: Wälzkörper
- 8: Käfig
- 9: Laufscheibe
- 10: Laufscheibe
- 11: Wälzkörper
- 12: Schmiermitteldurchtrittsbohrung
- 13: Schmiermitteldurchtrittsbohrung
- 14: Befestigungsbohrung
- 15: Trennebene
- 16: Lagerachse
- 17: Käfigsegment
- 18: Tasche
- 19: Haltenase
- 20: Kante
- 21: Vorsprung
- 22: Führungssteg
- 23: Freistellung
- 24: Radial-Axial-Wälzlager
- 25: Käfigsegment

## Patentansprüche

1. Radial-Axial-Wälzlager (1, 24) mit einem Innenring (2), zu dem koaxial ein Außenring (3) angeordnet ist, zwischen denen zur Aufnahme von radialen Kräften zylindrische Wälzkörper (6) abrollen und mit beidseitig zur Aufnahme von axialen Kräften angeordneten zylindrischen Wälzkörpern (11), deren Laufbahnen einerseits von Stirnflächen des Außenringes (3) und andererseits von je einer Laufscheibe (9, 10) gebildet sind, wobei die zylindrischen Wälzkörper (11) in Käfigsegmenten geführt sind, deren Führungsstege in einen Spalt (4) eingreifen, der vom Innen- (2) und vom Außenring (3) gebildet ist, **dadurch gekennzeichnet, dass** die Käfigsegmente (17, 25) bogenförmig ausgebildet sind und L-förmig abgewinkelte Führungsstege (22) aufweisen, die sich wenigstens über einen Teil einer Umfangsausdehnung der Käfigsegmente (17, 25) erstrecken und jedes einzelne Käfigsegment (17, 25) mehrere Taschen (18) aufweist, in denen verliersicher je ein zylindrischer Wälzkörper (11) aufgenommen ist.

2. Radial-Axial-Wälzlager (1) nach Anspruch 1, **dadurch gekennzeichnet, dass** die bogenförmigen Käfigsegmente (17) einreihig ausgebildet sind und sich die Führungsstege (22) über deren gesamte Umfangsausdehnung erstrecken.

3. Radial-Axial-Wälzlager (24) nach Anspruch 1, **dadurch gekennzeichnet, dass** die bogenförmigen Käfigsegmente (25) zweireihig ausgebildet sind und sich die Führungsstege (22) über einen Teil von deren Umfangsausdehnung erstrecken.

4. Radial-Axial-Wälzlager (1, 24) nach Anspruch 1, **dadurch gekennzeichnet, dass** die Taschen (18) der bogenförmigen Käfigsegmente (17, 25) zur Außenhalterung der Wälzkörper (11) mit federnden Haltenasen (19) versehen sind, die sich in Umfangsrichtung gegenüber liegen und in radialer Richtung voneinander beabstandet sind.

5. Radial-Axial-Wälzlager (1, 24) nach Anspruch 1, **dadurch gekennzeichnet, dass** die Taschen (18) der bogenförmigen Käfigsegmente (17, 25) zur Innenhalterung der zylindrischen Wälzkörper (11) mit einer deren Breite verringernden durchgehenden Kante (20) versehen sind.

6. Radial-Axial-Wälzlager (1, 24) nach Anspruch 1, **dadurch gekennzeichnet, dass** die Taschen (18) der bogenförmigen Käfigsegmente (17, 25) wenigstens an einem radial außen liegenden Ende mit einem punktartigen Vorsprung (21) versehen sind.

7. Radial-Axial-Wälzlager (1, 24) nach Anspruch 1, **dadurch gekennzeichnet, dass** der Innenring (2) mit einer der Laufscheiben (10) einstückig verbunden ist, so dass eine Trennungsebene (15) außerhalb eines Laufbahnbereiches der zylindrischen Wälzkörper (7) gelegt ist.

8. Radial-Axial-Wälzlager (1, 24) nach Anspruch 1, **dadurch gekennzeichnet, dass** der Innenring (2) mit einer Ausnehmung (6) zur Aufnahme der zylindrischen Wälzkörper (7) versehen ist.

9. Radial-Axial-Wälzlager (1, 24) nach Anspruch 8, **dadurch gekennzeichnet, dass** die zylindrischen Wälzkörper (7) vollrollig oder in einem Käfig (8) angeordnet sind.

10. Radial-Axial-Wälzlager (1, 24) nach Anspruch 1, **dadurch gekennzeichnet, dass** der Innenring (2) und/oder der Außenring (3) mit wenigstens einer Schmiermitteldurchtrittsbohrung (12, 13) versehen sind.

## Claims

1. Radial-axial rolling bearing (1, 24) having an inner ring (2), coaxially with respect to which is arranged an outer ring (3), between which inner ring and outer ring cylindrical rolling bodies (6) roll in order to absorb radial forces, and having cylindrical rolling bodies (11) arranged at both sides in order to absorb axial forces, the raceways of which are formed firstly by end surfaces of the outer ring (3) and secondly by in each case one rotor disc (9, 10), with the cylindrical rolling bodies (11) being guided in cage segments, the guide webs of which engage into a gap (4) formed by the inner ring (2) and outer ring (3), **characterized in that** the cage segments (17, 25) are of curved design and have L-shaped angled guide webs (22) which extend at least over a part of a circumferential extent of the cage segments (17, 25), and each individual cage segment (17, 25) has a plurality of pockets (18) in which in each case one cylindrical rolling body (11) is captively held.

2. Radial-axial rolling bearing (1) according to Claim 1, **characterized in that** the curved cage segments (17) are of single-row design and the guide webs (22) extend over the entire circumferential extent thereof.

3. Radial-axial rolling bearing (24) according to Claim 1, **characterized in that** the curved cage segments (25) are of double-row design and the guide webs (22) extend over a part of the circumferential extent thereof.

4. Radial-axial rolling bearing (1, 24) according to Claim 1, **characterized in that**, for retention of the rolling bodies (11) at the outside, the pockets (18) of the curved cage segments (17, 25) are provided with resilient retaining lugs (19) which are situated opposite one another in the circumferential direction and which are spaced apart from one another in the radial direction.

5. Radial-axial rolling bearing (1, 24) according to Claim 1, **characterized in that**, for retention of the cylindrical rolling bodies (11) at the inside, the pockets (18) of the curved cage segments (17, 25) are provided with a continuous edge (20) which decreases their width.

6. Radial-axial rolling bearing (1, 24) according to Claim 1, **characterized in that** the pockets (18) of the curved cage segments (17, 25) are provided, at least at a radially outer end, with a punctiform projection (21).

7. Radial-axial rolling bearing (1, 24) according to Claim 1, **characterized in that** the inner ring (2) is connected in a unipartite fashion to one of the rotor discs (10) such that a parting plane (15) is situated outside a raceway region of the cylindrical rolling bodies (7).

8. Radial-axial rolling bearing (1, 24) according to Claim 1, **characterized in that** the inner ring (2) is provided with a recess (6) for holding the cylindrical rolling bodies (7).

9. Radial-axial rolling bearing (1, 24) according to Claim 8, **characterized in that** the cylindrical rolling bodies (7) are arranged in a full-roller configuration or in a cage (8).

10. Radial-axial rolling bearing (1, 24) according to Claim 1, **characterized in that** the inner ring (2) and/or the outer ring (3) are/is provided with at least one lubricant passage bore (12, 13).

## Revendications

1. Roulement radial-axial (1, 24) comprenant une bague interne (2), coaxialement à laquelle est disposée une bague externe (3), entre lesquelles roulent des corps de roulement cylindriques (11) pour recevoir des forces radiales, et comprenant des corps de roulement cylindriques (11) disposés de chaque côté pour recevoir des forces axiales, dont les pistes de roulement sont formées d'une part par des surfaces frontales de la bague externe (3) et d'autre part par un disque de roulement respectif (9, 10), les corps de roulement cylindriques (11) étant guidés dans des segments de cage dont les nervures de guidage viennent en prise dans une fente (4), qui est formée par la bague interne (2) et la bague externe (3), **caractérisé en ce que** les segments de cage (17, 25) sont réalisés sous forme courbe et présentent des nervures de guidage (22) coudées en forme de L, qui s'étendent au moins sur une partie d'une étendue périphérique des segments de cage (17, 25), et chaque segment de cage individuel (17, 25) présentant plusieurs cavités (18), dans lesquelles est à chaque fois reçu de manière imperdable un corps de roulement cylindrique (11).

2. Roulement radial-axial (1) selon la revendication 1, **caractérisé en ce que** les segments de cage (17) de forme courbe sont réalisés en une rangée et les nervures de guidage (22) s'étendent sur toute leur étendue périphérique.

3. Roulement radial-axial (24) selon la revendication 1, **caractérisé en ce que** les segments de cage (25) de forme courbe sont réalisés en deux rangées et les nervures de guidage (22) s'étendent sur une partie de leur étendue périphérique.

4. Roulement radial-axial (1, 24) selon la revendication 1, **caractérisé en ce que** les cavités (18) des segments de cage (17, 25) de forme courbe sont pourvues de nez de retenue élastiques (19) pour retenir à l'extérieur les corps de roulement (11), lesquels sont opposés dans la direction périphérique et espacés les uns des autres dans la direction radiale.

5. Roulement radial-axial (1, 24) selon la revendication 1, **caractérisé en ce que** les cavités (18) des segments de cage (17, 25) de forme courbe sont pourvues d'une arête (20) continue réduisant leur largeur pour retenir à l'intérieur les corps de roulement cylindriques (11).

6. Roulement radial-axial (1, 24) selon la revendication 1, **caractérisé en ce que** les cavités (18) des segments de cage (17, 25) de forme courbe sont pourvues au moins sur une extrémité située radialement à l'extérieur d'une saillie ponctuelle (21).

7. Roulement radial-axial (1, 24) selon la revendication 1, **caractérisé en ce que** la bague interne (2) est connectée d'une seule pièce à l'un des disques de roulement (10), de sorte qu'un plan de séparation (15) soit situé en dehors d'une région de piste de roulement des corps de roulement cylindriques (7).

8. Roulement radial-axial (1, 24) selon la revendication 1, **caractérisé en ce que** la bague interne (2) est pourvue d'un évidement (6) pour recevoir les corps de roulement cylindriques (11).

9. Roulement radial-axial (1, 24) selon la revendication 8, **caractérisé en ce que** les corps de roulement cylindriques (11) sont disposés sans cage ou dans une cage (8).

10. Roulement radial-axial (1, 24) selon la revendication 1, **caractérisé en ce que** la bague interne (2) et/ou la bague externe (3) sont pourvues d'au moins un alésage de passage pour lubrifiant (12, 13).
